# EUROPEAN PATENT APPLICATION

(11) **EP 1 536 350 A2**
(43) Date of publication of application: **01.06.2005**
(21) Application number: 04397023.5
(22) Date of filing: 26.11.2004
(51) Int. Cl.: G06F 17/30

(54) **System and method for creating dynamic internet bookmark**

(30) Priority: 26.11.2003 US 722807
(71) Applicant: Nokia Corporation, 02150 Espoo (FI)
(72) Inventor: Lehikoinen, Juha, 34110, LAkiala (FI); Huuskonen, Pertti, 33820, Tampere (FI); Salminen, Ilkka, 33540 Tampere (FI)
(74) Representative: Pursiainen, Timo Pekka

(57) **Abstract**

Creating a dynamic Internet link includes storing terms associated with a bookmarked Internet resource in a bookmark entry, storing a resource name associated with the bookmarked Internet resource in the bookmark entry, and storing a locator identifier associated with the bookmarked Internet resource in the bookmark entry. Updating the dynamic Internet bookmark when the bookmarked Internet resource has changed location by performing a search using stored terms to obtain search results, comparing resource names of resources from the search results from the performed search with the stored resource name of the bookmarked Internet resource to obtain a matching resource having the same resource name, and storing a new locator identifier of the matching resource in the bookmark entry.

## Description

### FIELD OF THE INVENTION

The present invention relates generally to information retrieval in a computer network. More particularly, the present invention relates to a dynamic Internet linking system and method.

### BACKGROUND OF THE INVENTION

As is known, the Internet is a network of computers, servers, and telecommunication networks that transmit messages in a digital form. The messages transmitted over the Internet can include Internet resources, such as hypermedia pages. Hypermedia pages, which can take many forms such as HyperText Markup Language (HTML) documents, Adobe Acrobat ™ PDF files, video clips, digital photographs, etc., are transferred as files from one server to another and finally to a receiving terminal. The HyperText Transfer Protocol (HTTP) is commonly used for data transmission on the Internet, however other protocols, such as File Transfer Protocol (FTP), or other network or wireless data transfer protocols could be used. The protocol typically transmits the information in the form of packets between terminals on the Internet.

In addition to basic presentation formatting, HTML allows web page developers to specify "links" to other Internet resources identified by a URL. Each logical block of information accessible to a client, called a "page" or a "Web page", is identified by a Uniform Resource Locator (URL). The URL provides a universal, consistent method for finding and accessing this information, not necessarily for the user, but mostly for the User Agent (RFC 1866) such as an Internet "browser". A browser is a program capable of submitting a request for information identified by an identifier, such as, for example, a URL. A URL typically includes a domain name, which identifies the server on which the Internet resource resides, as well as specific file directory and name information identifying the location and name of the stored resource on the server. A user may enter a URL through a graphical user interface (GUI) for the browser to access a source of content. The domain name portion of the URL is automatically converted to an Internet Protocol (IP) address by a domain name service (DNS) (RFC 3467), which is a service that translates the symbolic domain name entered by the user into an IP address understandable by a computer by looking up the domain name in a database.

The Internet contains increasingly many resources accessible via both desktop personal computers (PCs) as well as mobile devices, such as laptop computers, personal digital assistants (PDAs), mobile terminals, for example the Nokia™ Communicator™ line of products, and wireless access protocol (WAP) enabled mobile phones. Finding required information from this immense amount of information can be a demanding task. Conventionally, the task of finding information on the Internet is best performed via a search engine (such as www.google.com). Using a search engine, the user types in search criteria, such as keywords, search terms, search phrases, search questions, file attributes, author information, general resource location or content, content type identifiers, or other criteria, that he or she thinks best describe the desired information, and the search engine then displays the resources that fulfill the search criteria.

Once the user has found the information he or she requested, the user may wish to save a reference to that resource in order to access it easier later. This saved reference or link is commonly referred to as a bookmark. Current Internet bookmarking and linking systems save the URL address of the resource. By collecting bookmarks, the user is able to access many important resources with a click of a button.

One problem inherent to bookmarks is their static nature. In other words, once a bookmark is stored, it only contains static URL information that points to the desired resource in textual form. However, since the Internet is in continuous state of change, it is more than common that links change. For example, the site administrator for a bookmarked site may close a site, switch to another service provider, and so forth. The bookmarked resource URL may be relocated, modified, or deleted for any number of reasons. The static links used with conventional bookmarks are not able to find the new resource location.

Thus, there is a need for an improved Internet referencing system. Further, there is a need for dynamic Internet bookmarks that can change if the location of the resource they refer to changes. Even further, there is a need to locate target Internet resources even after the resources' uniform resource locator (URL) have changed or when the resource has been moved to another domain or another folder within the original domain, etc.

### SUMMARY OF THE INVENTION

The present invention is directed to a dynamic Internet linking system and method. In a one example, a dynamic bookmark feature is described which adds a search term or words and/or search criteria to a bookmark such that the terms and/or criteria can be used when the bookmarked resource is found to be obsolete or is not found. The dynamic Internet linking system and method can be embodied in a computer program product which can be included on a storage medium (such as a CD-ROM), in a plug-in or add-on, as a download, or using any of a variety of other electronic transmission techniques.

Briefly, one example relates to methods for creating and updating a dynamic Internet bookmark. One method includes creating a dynamic Internet bookmark by performing the operations of storing terms associated with a bookmarked Internet resource in a bookmark entry, storing a resource name associated with the bookmarked Internet resource in the bookmark entry, and storing a locator identifier associated with the bookmarked Internet resource in the bookmark entry. One method for updating the dynamic Internet bookmark when the bookmarked Internet resource has changed location can comprise performing the operations of performing a search using stored terms to obtain search results, comparing the names of resources (such as documents, pages, files, etc.) from the search results from the performed search with the stored resource name of the bookmarked Internet resource to obtain a matching resource having the same or similar resource name, and storing a new locator identifier of the matching resource in the bookmark entry.

Another example relates to systems for creating and updating a dynamic Internet bookmark. One system includes a bookmark entry having a resource address, a resource title, and terms associated with a bookmarked resource; and an Internet browser configured to store the bookmark entry.

Yet another example relates to a computer program product including computer code configured to create a dynamic Internet bookmark for a bookmarked Internet resource and update the dynamic Internet bookmark when a location of the bookmarked Internet resource has changed.

Other principle features and advantages of the invention will become apparent to those skilled in the art upon review of the following drawings, the detailed description, and the appended claims.

### BRIEF DESCRIPTION OF THE DRAWINGS

Example embodiments will hereafter be described with reference to the accompanying drawings.

FIG. 1 is a flow diagram depicting creation operations in a dynamic Internet bookmark system and method in accordance with an example embodiment.

FIG. 2 is a flow diagram depicting updating operations in a dynamic Internet bookmark system and method in accordance with an example embodiment.

FIG. 3 is a diagrammatic representation of an example of a bookmark entry in accordance with an example embodiment.

FIG. 4 is a diagrammatic representation of another example of a bookmark entry in accordance with an example embodiment.

FIG. 5 is a flow diagram depicting operations to obtain search terms in an example of the dynamic Internet bookmark system and method.

FIG. 6 is a diagrammatic representation of various Internet resources and operations performed in the creation of a dynamic bookmark entry.

### DETAILED DESCRIPTION OF EXAMPLE EMBODIMENTS

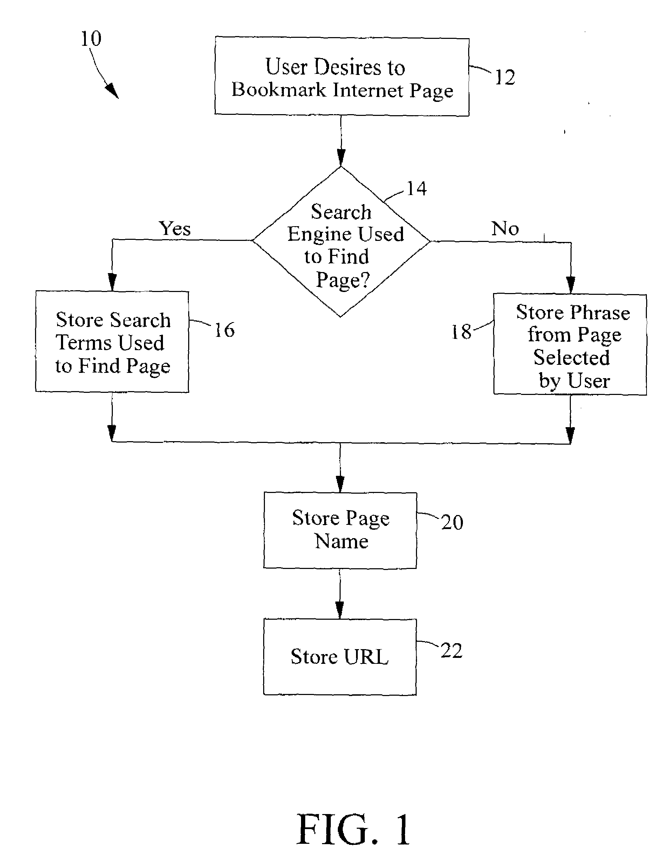

FIG. 1 illustrates a flow diagram 10 of example of operations in a dynamic Internet bookmark system and method. Additional, fewer, or different operations may be performed in accordance with alternative embodiments. The flow diagram 10 depicts operations in the creation of a dynamic bookmark.

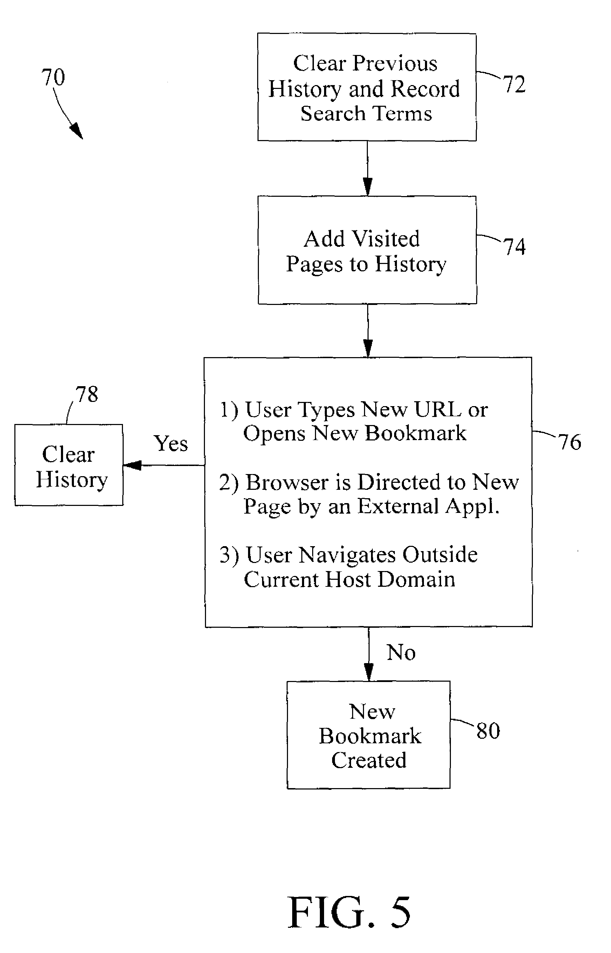

In an operation 12, the user decides to bookmark an Internet page by selecting an "Add Bookmark" feature using an Internet browser, such as Netscape Navigator™ or Microsoft Internet Explorer™. The browser accesses a history file to determine in an operation 14 whether or not the resource that the user wants to bookmark was found as a result of an Internet search engine search. One example process for obtaining search terms is described below with reference to FIG. 5. If the resource was found using a search engine, the search terms used with the search engine are stored as part of the bookmark entry in an operation 16. When the user types in a query in a search engine (e.g. google), the engine displays a result list, i.e. a list of web resources that fulfill the entered search criteria, as usual. The user may then browse the presented resources and look for the desired one.

If the resource was found without using a search engine (e.g., entering a URL directly into the browser), the user is asked to highlight a phrase from the resource that is representative of the contents of the resource. The bookmark is then created by storing the URL and this passage as search text. Typically, a phrase from a web resource can be highlighted in a browser by holding down a mouse click button and moving the cursor over the text. In an operation 18, the highlighted phrase is stored. In an alternative embodiment, highlighted phrases can be used even if a resource was found using a search engine. In yet another embodiment, search terms and highlighted text can be taken automatically. Meta data, or other resource attributes such as creation or modification date, file size, content type, EXIF data from a digital image, etc., from resources found in a search and/or retried from a search can also be used.

Once the search terms or selected phrases are stored in operations 16 or 18, the resource name is stored as part of the bookmark entry in an operation 20. The resource name is indicated in the HTML programming language by the HTML tag <TITLE>. In an operation 22, the URL of the resource is stored as part of the bookmark entry.

Advantageously, operations 12-22 create a dynamic bookmark that can be used to locate a target resource even if the resource address has changed. The bookmark entry can include the search terms that were used to find the desired resource or selected passage of text from the resource, the name of the resource that was bookmarked, the resource's current URL, meta data from the resource, or any other information helpful for locating the resource.

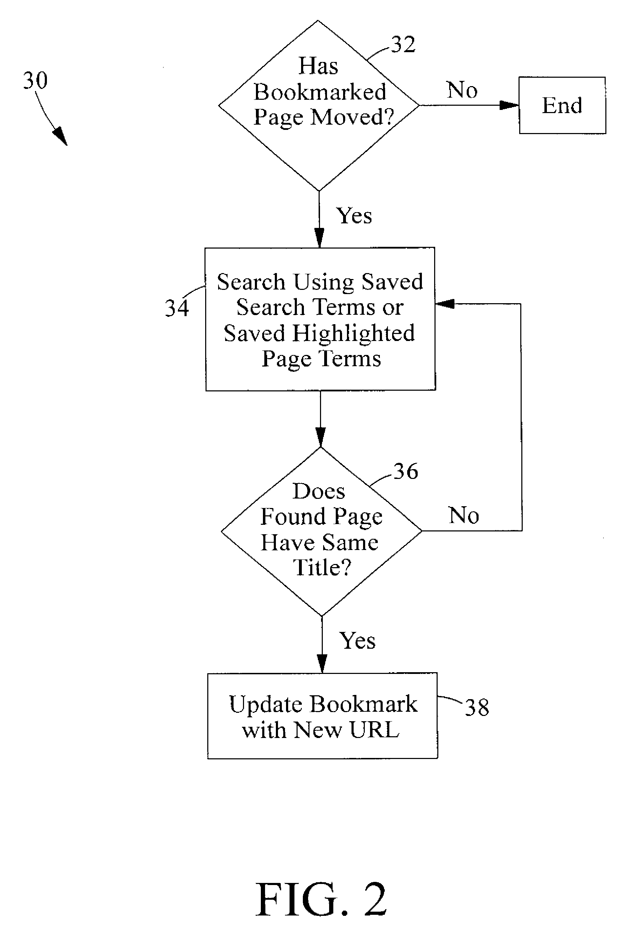

FIG. 2 illustrates a flow diagram 30 of example of operations in a dynamic Internet bookmark system and method. Additional, fewer, or different operations may be performed in accordance with alternative embodiments. The flow diagram 30 depicts operations in the updating of a dynamic bookmark.

An operation 32 is performed to determine whether a bookmarked resource has moved. When a user selects a bookmark to navigate to a resource, the browser first uses the stored URL link to find the resource. If the resource exists, it is opened. However, if the resource has been removed or the location has been changed, the browser automatically performs a search of stored search terms or terms selected by the user in an operation 34. Any of a variety of search engines can be used, including user-selected search engines or a default search engine. The search can also be performed in a different window or frame. In fact, multiple searches can be conducted in multiple windows or frames giving the user the option to select from a number of options. As described with reference to FIG. 1, these terms are stored within the bookmark entry.
In an operation 36, the browser checks whether a resource with a title similar to the bookmark's title is found in the search result set. Similarity can be determined using a thesaurus, word resemblance, a comparison engine, and/or meta data and a title. If an exact match is not found, resources with similar titles can be displayed to the user so that the user can select from the list of similar titles. In an alternative embodiment, similarity in resource file names, determined from the URL, can be examined. If a resource is found, it is opened. If the resource is the resource that the user wants associated with the bookmark, the bookmark is updated with the new URL in an operation 38. The user may also browse the result set of the search of terms manually in order to locate a relevant resource.

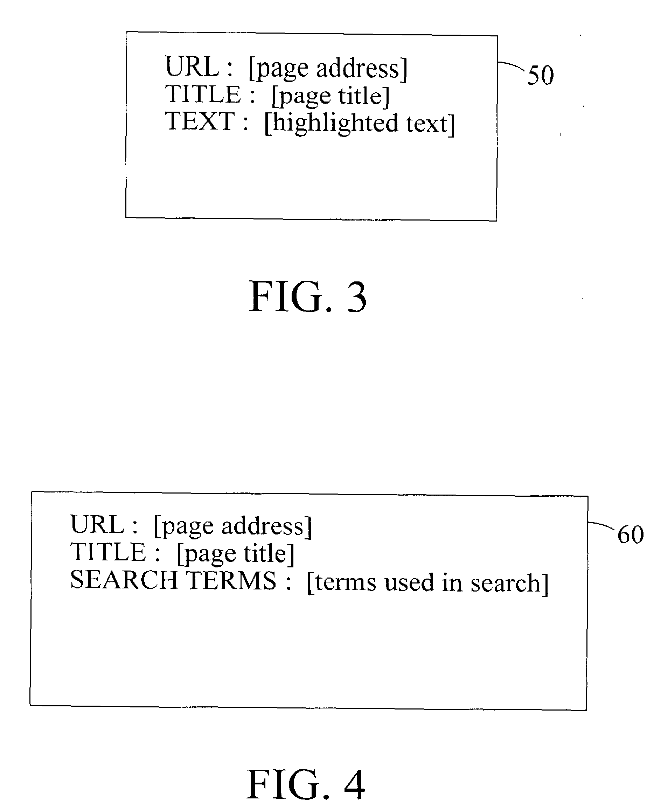

FIG. 3 illustrates an example of bookmark entry. A bookmark entry 50 can include the following fields: the URL: the address of the resource, the TITLE: the contents of the <TITLE> HTML tag, and SEARCH_TERMS: the search terms that were used to discover the resource, META data: the data entered by the page author. Date: pages are not updated that are older than the original unless the user specifies otherwise. The URL and the TITLE can be obtained directly from the resource source HTML file.

FIG. 4 illustrates another example of a bookmark entry. A bookmark entry 60 can include the following fields: the URL: the address of the resource, the TITLE: the contents of the <TITLE> HTML tag, and SEARCH_TEXT: the text highlighted for bookmarking by the user. The SEARCH_TEXT field contents are obtained from a passage of text fromthe resource that the user has selected. The SEARCH_TEXT of bookmark entry 60 (FIG. 4) and the SEARCH_TERMS of bookmark entry 50 (FIG. 3) are optional fields. However, at least one of them is preferably present to create the dynamic bookmark. In some embodiments, both may be present in a bookmark entry.

FIG. 5 illustrates a flow diagram 70 depicting operations to obtain search terms. The SEARCH_TERMS field of the bookmark entry 50 (FIG. 3) can be obtained from the history of last search terms. These search terms can be obtained using the following procedure. Additional, fewer, or different operations may be performed in accordance with alternative embodiments.

In an operation 72, each time the user initiates a new search, the browser clears a previous search history file and records the search terms and the current host domain into the search history file. In an operation 74, the browser adds subsequently visited resources to the history. Addition of these visited resources to the history file collects the URL's associated with the search terms from the search. After the search is performed, a variety of actions that affect the search history file are monitored in an operation 76. For example, if the user types in a new URL or opens an existing bookmark, if the browser is directed to a new resource by an external application, or if the user navigates outside the current host domain, the browser clears the search history file in an operation 78. In an operation 80, when the user creates a bookmark and the history contains search terms, the browser includes the search terms from the history into the bookmark.

Some of the advantages of the example embodiments described with reference to the Figures include the following. The example embodiments allow the use of bookmarks that reference pages even after the resources' web addresses have changed. Advantageously, the dynamic Internet bookmark feature can be implemented using software changes and current browser technologies. For example, the dynamic Internet bookmark can be implemented in software using a plug-in or an add-on. In addition to bookmarks, this technique can be extended to be used within all links in any web resource, making the whole linking structure of the Internet much more dynamic and flexible.

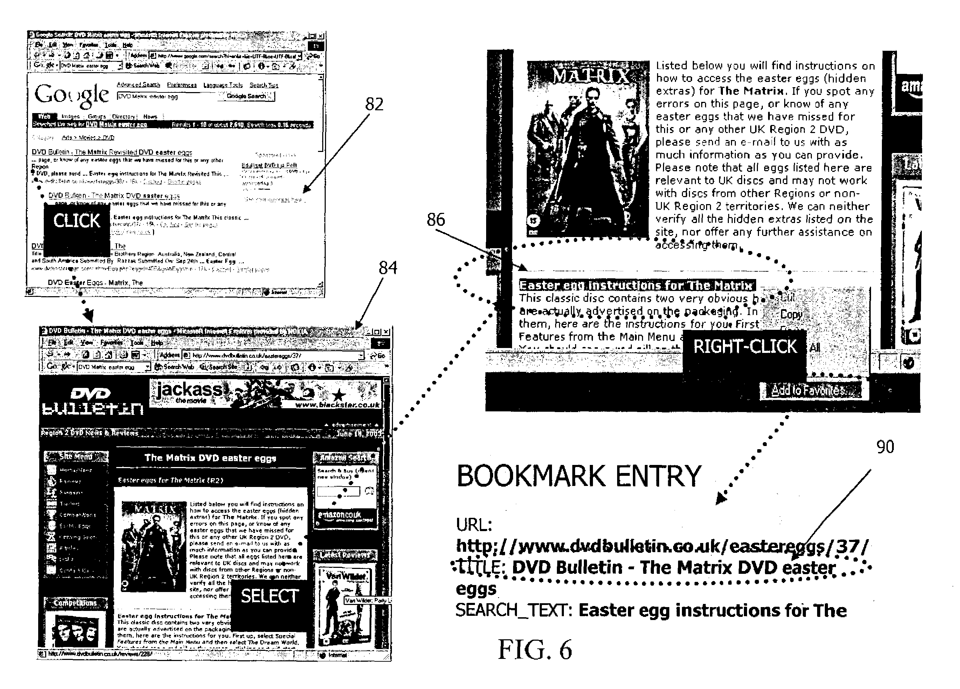

FIG. 6 illustrates various Internet resources and operations performed in the creation of a dynamic bookmark entry. By way of example, an Internet resource 82 is a search result page from a search of the terms "DVD Matrix easter egg." An Internet resource 84 is one of the resources from the search results shown in the Internet resource 82. The Internet resource 84 includes a text passage 86 that is highlighted using a computer mouse. The user clicks the right mouse button to open a pop-up menu 88. The menu 88 contains an entry for adding a new bookmark. When the user chooses to add a bookmark, the contents of a bookmark entry 90 are populated by the browser. In this example, both "search terms" and "search text" fields of the bookmark entry 90 are filled by the browser.

This detailed description outlines example embodiments of a dynamic Internet bookmark system and method. In the foregoing description, for purposes of explanation, numerous specific details are set forth in order to provide a thorough understanding of the present invention. It is evident, however, to one skilled in the art that the example embodiments may be practiced without these specific details. In other instances, structures and devices are shown in block diagram form in order to facilitate description of the example embodiments.

While the example embodiments illustrated in the Figures and described above are presently preferred, it should be understood that these embodiments are offered by way of example only. Other embodiments may include, for example, different techniques for performing the same operations. The invention is not limited to a particular embodiment, but extends to various modifications, combinations, and permutations that nevertheless fall within the scope and spirit of the appended claims.

## Claims

1. A method for creating a dynamic Internet bookmark, the method comprising:
- storing search criteria associated with a bookmarked Internet resource in a bookmark entry; and
- storing a resource attribute associated with the bookmarked Internet resource in the bookmark entry.

2. The method of claim 1, further comprising storing a locator identifier associated with the bookmarked Internet resource in the bookmark entry.

3. The method claim 1, wherein the search criteria further comprise a selected text passage from the bookmarked Internet resource.

4. The method of claim 1, wherein the search criteria comprises search terms from a search history file containing terms used in an Internet search engine search.

5. The method of claim 1, wherein the resource attribute further comprises a resource name of the Internet resource.

6. The method of claim 1, wherein the resource attribute further comprises a creation date or modification date for the Internet resource.

7. The method of claim 1, wherein the resource attribute further comprises a meta data of the Internet resource.

8. The method of claim 1, wherein the resource attribute further comprises EXIF data of the Internet resource.

9. The method of claim 1, wherein the resource attribute further comprises a file name associated with the Internet resource.

10. The method of claim 2, wherein the locator identifier is a uniform resource locator (URL).

11. The method of claim 1, wherein the dynamic Internet bookmark is a hypermedia link on an Internet resource.

12. The method of claim 1 further comprising updating the dynamic Internet bookmark entry associated with the bookmarked Internet resource when the bookmarked Internet resource has changed by performing the operations of:
- performing a search using the stored criteria to obtain search results;
- comparing a resource attribute of resources from the search results from the performed search with the stored resource attribute of the bookmarked Internet resource to obtain a matching resource having a similar resource attribute; and
- storing a new locator identifier of the matching resource as a property of the dynamic Internet bookmark entry.

13. A device for creating a dynamic Internet bookmark, the device comprising:
- a computer including an Internet browser;
- means for connecting the Internet browser to a search engine; and
- means for adding a bookmark entry, the bookmark entry having a resource attribute and a resource search criteria associated with a bookmarked Internet resource.

14. The device of claim 13, wherein the bookmark entry further comprises a locator identifier associated with the bookmarked Internet resource.

15. The device of claim 13, wherein the search criteria further comprises a selected text passage from the bookmarked Internet resource.

16. The device of claim 13, wherein the search criteria further comprises search terms from a search history file containing terms used in an Internet search engine search.

17. The device of claim 13, wherein the bookmark entry can be updated when the bookmarked Internet resource has changed by:
- performing a search engine search using the resource search criteria to obtain search results;
- comparing a resource attribute of resources from the search results from the performed search with the resource attribute of the bookmarked Internet resource to obtain a matching resource having a similar resource attribute; and
- replacing the bookmark entry resource attribute with a resource attribute of the matching resource.

18. The device of claim 13, wherein the resource attribute further comprises a resource name of the Internet resource.

19. The device of claim 13, wherein the resource attribute further comprises a creation date or modification date for the Internet resource.

20. The device of claim 13, wherein the resource attribute further comprises meta data of the Internet resource.

21. The device of claim 13, wherein the resource attribute further comprises EXIF data of the Internet resource.

22. The device of claim 13, wherein the computer further comprises a personal computer.

23. The device of claim 13, wherein the computer further comprises a mobile device.

24. The device of claim 23, wherein the mobile device further comprises a personal digital assistant.

25. The device of claim 23, wherein the mobile device further comprises a mobile terminal.

26. The device of claim 23, wherein the mobile device further compri ses a wireless access protocol enabled mobile phone.

27. A system for creating a dynamic Internet bookmark, the system comprising:
- a first computer having a search engine; and
- a second computer, the second computer including:
an Internet browser;
means for connecting the Internet browser to the search engine; and
means for adding a bookmark entry, the bookmark entry having a resource attribute and a resource search criteria associated with a bookmarked Internet resource.

28. The system of claim 27, wherein the search criteria associated with a bookmarked resource comprises a selected text passage from the bookmarked resource.

29. The system of claim 27, wherein the search criteria associated with a bookmarked resource comprises search terms from a search history file having terms used in a search engine search.

30. The system of claim 27, wherein the bookmark entry is accessed by a hypermedia link on an Internet resource.

31. The system of claim 27, wherein the bookmark entry further comprises a resource address.

32. A computer program product comprising:
computer code configured to:
- create a dynamic Internet bookmark for a bookmarked Internet resource; and
- update the dynamic Internet bookmark when the bookmarked Internet resource has changed.

33. The computer program product of claim 32, wherein the computer code to update the dynamic Internet bookmark when a location of the bookmarked Internet resource has changed comprises:
- computer code to perform a search using a search criteria to obtain search results;
- computer code to compare a resource attribute of resources from the search results from the performed search with the stored resource attributes of the bookmarked Internet resource to obtain a matching resource having a similar resource attribute; and
- computer code to store a new locator identifier of the matching resource in the bookmark entry.

34. The computer program product of claim 32, wherein the computer code to create a dynamic Internet bookmark for a bookmarked Internet resource comprises:
- computer code to store a search criteria associated with a bookmarked Internet resource in a bookmark entry;
- computer code to store a resource attribute associated with the bookmarked Internet resource in the bookmark entry; and
- computer code to store a locator identifier associated with the bookmarked Internet resource in the bookmark entry.

35. The computer program product of claim 34, wherein the search criteria associated with a bookmarked Internet resource comprises a selected text passage from the bookmarked Internet resource.

36. The computer program product of claim 34, wherein the search criteria associated with a bookmarked Internet resource comprises search terms from a search history file containing terms used in an Internet search engine search.
